# EUROPÄISCHE PATENTSCHRIFT

(11) **EP 0 924 784 B1**
(45) Veröffentlichungstag und Bekanntmachung des Hinweises auf die Patenterteilung: **08.11.2000**
(21) Anmeldenummer: 98710019.5
(22) Anmeldetag: 03.12.1998
(51) Int. Cl.: H01M 4/92, H01M 8/10, B01J 23/42, B01J 23/40, B01J 23/46, B01J 35/06, H01M 8/12

(54) **Gegen CO unempfindlicher Anodenkatalysator für Brennstoffzellen mit Polymerelektrolyt-Membranen und Verfahren zu seiner Herstellung**
CO tolerant anode catalyst for PEM fuel cells and method for its production
Catalyseur tolérant le CO pour cellule a combustible de type PEM et sa méthode de fabrication

(30) Priorität: 19.12.1997 DE 19756880
(43) Veröffentlichungstag der Anmeldung: 23.06.1999
(73) Patentinhaber: Degussa-Hüls Aktiengesellschaft, 60287 Frankfurt am Main (DE)
(72) Erfinder: Auer, Emmanuel, Dr., 60528 Frankfurt (DE); Behl, Walter, 63454 Hanau (DE); Lehmann, Thomas, Dr., 63505 Langenselbold (DE); Stenke, Udo, 63814 Mainaschaff (DE)

(56) Entgegenhaltungen:
- EP-A- 0 329 626
- EP-A- 0 549 543
- EP-A- 0 880 188
- US-A- 5 489 563
- US-A- 5 698 488
- PATENT ABSTRACTS OF JAPAN vol. 013, no. 002 (E-700), 6. Januar 1989 & JP 63 213260 A (FUJI ELECTRIC CO LTD), 6. September 1988

## Beschreibung

Die Erfindung betrifft einen Platin/Ruthenium-Legierungskatalysator, welcher fein verteilte Legierungspartikel auf einem pulverförmigen, elektrisch leitfähigen Trägermaterial enthält. Der Katalysator ist besonders als Anodenkatalysator von Brennstoffzellen mit einer Polymerelektrolytmembran geeignet.

Brennstoffzellen sind im Prinzip gasbetriebene Batterien, bei denen die aus der Reaktion von Wasserstoff und Sauerstoff gewonnene Energie direkt in elektrische Energie umgesetzt wird. Die vorliegende Erfindung beschreibt die Herstellung von Katalysatoren für Brennstoffzellen, insbesondere die Herstellung von Trägerkatalysatoren auf der Basis von Platin- und Platinlegierungen für PEM-Brennstoffzellen (PEM = Polymerelektrolytmembran). Dieser Brennstoffzellentyp gewinnt wegen seiner hohen Energiedichte und Robustheit zunehmende Bedeutung als Stromquelle für mit Elektromotoren betriebene Kraftfahrzeuge.

Brennstoffzellen weisen im Vergleich zu konventionellen Verbrennungsmaschinen sehr niedrige Emissionen bei gleichzeitig sehr hohem Wirkungsgrad auf. Wird als Brenngas Wasserstoff verwendet, entsteht als einzige Emission Wasser auf der Kathodenseite der Zelle. Kraftfahrzeuge mit einem solchen Antrieb werden als ZEV (Zero Emission Vehicle) bezeichnet.

Wasserstoff ist jedoch zum gegenwärtigen Zeitpunkt noch zu teuer und bereitet Probleme bei der Speicherung und bei der Betankung von Fahrzeugen. Aus diesem Grunde gewinnt die Alternative, Wasserstoff direkt an Bord des Fahrzeuges durch Reformieren von Methanol zu erzeugen, zunehmend an Bedeutung. Das im Fahrzeugtank gespeicherte Methanol wird in einem Steamreforming-Prozeß bei 200 - 300°C in ein wasserstoffreiches Brenngas mit Kohlendioxid und Kohlenmonoxid als Nebenbestandteile umgewandelt. Nach Umsetzung des Kohlenmonoxids durch Shift-Reaktion, Preferential-Oxidation (PROX) oder andere Reinigungsverfahren wird dieses Brenngas direkt der Anodenseite der PEM-Brennstoffzelle zugeleitet. Das Reformatgas besteht theoretisch aus 75 Vol.-% Wasserstoff und 25 Vol.-% Kohlendioxid. In der Praxis enthält dieses Gas jedoch noch Stickstoff, Sauerstoff und, je nach Reinigungsgrad, wechselnde Mengen an Kohlenmonoxid (bis zu 1 Vol.-%).

Als Katalysatoren auf der Anoden- und Kathodenseite der PEM-Brennstoffzelle werden Katalysatoren auf der Basis von Platin- und Platinlegierungen verwendet. Diese bestehen aus feinen Edelmetallpartikeln, die auf einem leitfähigen Trägermaterial (meist Ruß oder Graphit) abgeschieden sind. Der Gehalt an Edelmetall liegt zwischen 10 bis 50 Gew.-%, bezogen auf das Gesamtgewicht des Katalysators.

Herkömmliche Platinkatalysatoren sind gegen eine Vergiftung durch Kohlenmonoxid sehr empfindlich, daher muß der Gehalt des Brenngases an Kohlenmonoxid auf unter 10 ppm abgesenkt werden, um Leistungseinbußen der Brennstoffzellen durch eine Vergiftung des Anodenkatalysators zu verhindern. Dies gilt insbesondere für die PEM-Brennstoffzelle, die mit ihren niedrigen Arbeitstemperaturen von 70 bis 100°C besonders empfindlich gegen eine Vergiftung durch Kohlenmonoxid ist.

Die vorliegende Erfindung befaßt sich mit der Herstellung von Trägerkatalysatoren auf der Basis von bimetallischen Platin/Ruthenium-Legierungskatalysatoren, die eine hohe Resistenz gegen eine Vergiftung durch Kohlenmonoxid aufweisen. Gehalte des Reformatgases an Kohlenmonoxid von über 100 ppm sollen möglich sein und praktisch zu keiner merklichen Leistungseinbuße der PEM-Brennstoffzelle führen.

Durch die Verwendung solcher neuartiger Katalysatoren auf der Anodenseite der PEM-Brennstoffzelle kann die Anzahl der notwendigen Prozeßschritte zur Entfernung von Kohlenmonoxid aus dem Brenngas vermindert werden. Dies führt zu einer erheblichen Senkung der Systemkosten, zu einer Verbesserung des Systemwirkungsgrades sowie zu einer Verkleinerung des Gesamtsystems. Die neuen Katalysatoren sind daher von großer Bedeutung für die Einführung der PEM-Brennstoffzelle bei Kraftfahrzeugen.

Das Problem der Vergiftung von Platinkatalysatoren durch Kohlenmonoxid ist seit langem bekannt. Kohlenmonoxid wird aufgrund seiner speziellen Molekülstruktur an der Oberfläche des Platins adsorbiert und blockiert so den Zugang der Wasserstoffmoleküle des Brenngases zu den katalytisch aktiven Zentren des Platins.

Durch Zusatz von Wasser kann das adsorbierte Kohlenmonoxid zu Kohlendioxid oxidiert werden und läßt sich dann von der Katalysatoroberfläche entfernen. Es ist auch bekannt, die Toleranz des Platinkatalysators gegenüber einer Vergiftung durch Kohlenmonoxid durch Legieren oder Dotieren des Platins mit anderen Metallen zu verbessern.

Die EP 0 501 930 B1 beschreibt zum Beispiel quaternäre Legierungen aus Platin, Nickel, Kobalt und Mangan als Anodenkatalysator von Phosphorsäure-Brennstoffzellen (PAFC: Phosphoric Acid Fuel Cell), der eine gute Resistenz gegenüber Kohlenmonoxid bei den hohen Betriebstemperaturen einer Phosphorsäure-Brennstoffzelle von 160 bis 200°C besitzt. Die Legierungspartikel haben eine Größe von etwa 3 nm. Bei den hohen Betriebstemperaturen der Phosphorsäure-Brennstoffzelle ist allerdings die Neigung von Kohlenmonoxid auf Metalloberflächen zu adsorbieren von vornherein geringer als bei den niedrigen Betriebstemperaturen einer PEM-Brennstoffzelle.

L.W. Niedrach et.al. (J. Electrochemical Techn. 5, 1967, S.318) beschreiben die Verwendung von Pt/Ru-Katalysatoren als CO-tolerante Anodenkatalysatoren für schwefelsaure Brennstoffzellen. Diese Materialien bestehen aus feinen Pt/Ru-Legierungspulvern mit hohen spezifischen Oberflächen. Sie werden über den sog. ADAMS-Prozess in einer Schmelze aus Platinchlorid, Ruthenium und Natriumnitrat bei 500°C hergestellt. Aufgrund der hohen Temperaturen bei der Herstellung liegen diese Katalysatoren als Pt/Ru-Legierungen vor. Die Materialien sind nicht auf einem Träger fixiert und stellen damit keine Trägerkatalysatoren dar. Auch über ihre Verwendung in einer PEM-Brennstoffzelle liegen keine Angaben vor.

Die EP 0 549 543 B1 beschreibt ein Verfahren zur Herstellung von Trägerkatalysatoren, welche hochdisperse Metallpartikel mit mittleren Partikelgrößen von unter 2 nm enthalten. Das Verfahren besteht darin, daß Metallionen in einer Suspension des Trägermaterials durch ein Reduktionsmittel in Gegenwart von Kohlenmonoxid reduziert und gleichzeitig auf dem Träger abgeschieden werden. Das anwesende Kohlenmonoxid wird an den sich abscheidenden Metallpartikeln adsorbiert und behindert somit das weitere Partikelwachstum. Nach erfolgter Abscheidung wird der Katalysator gewaschen und bei einer Temperatur unter 100°C in einer reduzierenden Atmosphäre getrocknet. Hierbei wird das Kohlenmonoxid desorbiert. In Beispiel 4 wird die Herstellung eines Platin/Ruthenium-Katalysators auf Kohlenstoff mit einer mittleren Partikelgröße der Platin/Ruthenium-Partikel von 1,7 nm beschrieben. Bei diesem Katalysator handelt es sich jedoch nicht um einen Legierungskatalysator, da die Adsorption des Kohlenmonoxids auf den Metallpartikeln während der Abscheidung die Ausbildung einer Legierung verhindert. Auch durch die nachfolgende Temperaturbehandlung bis 100°C wird keine Legierung gebildet. Über die Eigenschaften dieses Katalysators bei der Verwendung als Anodenkatalysator in einer PEM-Brennstoffzelle mit einem Kohlenmonoxid enthaltenden Reformatgas wird keine Aussage gemacht.

Seit einiger Zeit ist ein Platin/Ruthenium-Legierungskatalysator auf einem Trägermaterial kommerziell erhältlich. Es handelt sich hierbei um einen Pt/Ru-Legierungskatalysator mit einer Edelmetallbeladung zwischen 5 und 40 Gew.-% und einem Pt/Ru-Atomverhältnis von 1:1. Dieser Katalysator weist eine einheitliche, durch XRD nachweisbare, Legierungsphase auf. Untersuchungen dieses Katalysators ergaben eine unbefriedigende Toleranz gegenüber Kohlenmonoxid, insbesondere bei Konzentrationen von Kohlenmonoxid über 100 ppm und restlichem Sauerstoff im Brenngas.

Von M. Iwase und S. Kawatsu wird in einer neueren Arbeit über die Entwicklung von CO-toleranten Anodenkatalysatoren berichtet (M. Iwase und S. Kawatsu, Electrochemical Society Proceedings , Volume 95-23, S. 12). In dieser Arbeit wurden die besten Ergebnisse mit einem Pt/Ru-Legierungskatalysator erzielt, bei dem die Bildung der Legierung durch eine besondere Temperaturbehandlung erhalten wurde. Der Spannungsabfall bei einer Stromdichte von 0,4 A/cm² betrug bei einem CO-Gehalt von 100 ppm trotzdem noch ca. 200 mV. Dies ist für einen praktischen Betrieb noch zu hoch. Mit einem unlegierten Pt/Ru-Katalysator wurden dagegen noch schlechtere Ergebnisse erzielt.

Die positive Wirkung des Rutheniums auf die Vergiftungsresistenz wird darauf zurückgeführt, daß Kohlenmonoxid bei Anwesenheit von Sauerstoff in Gegenwart von Ruthenium zu Kohlendioxid oxidiert wird, welches eine geringere Neigung zur Adsorption an Metalloberflächen als Kohlenmonoxid zeigt.

Aufgabe der vorliegenden Erfindung ist es daher, einen Platin/Ruthenium-Legierungskatalysator auf einem Träger bereitzustellen, der eine verbesserte Toleranz gegenüber Kohlenmonoxid aufweist. Der Katalysator soll für einen Betrieb mit Kohlenmonoxid, Stickstoff und Sauerstoff enthaltenden Brenngasen geeignet sein und auch bei Gehalten des Brenngases an Kohlenmonoxid von mehr als 100 ppm einen möglichst geringen Spannungsabfall bei hohe Stromdichten zeigen.

Die Aufgabe wird gelöst durch einen Platin/Ruthenium-Legierungskatalysator, welcher auf einem pulverförmigen, elektrisch leitfähigen Trägermaterial fein verteilte Legierungspartikel enthält. Der Legierungskatalysator ist dadurch gekennzeichnet, daß die Legierungspartikel mittlere Kristallitgrößen von 0,5 bis 2 nm aufweisen.

Überraschenderweise hat sich gezeigt, daß die Pt/Ru-Legierungskatalysatoren eine sehr gute CO-Toleranz bis zu einer Konzentration von 150 ppm Kohlenmonoxid im Brenngas aufweisen, wenn die Legierungspartikel kleiner als 2 nm sind. Unterhalb einer Partikelgröße von 0,5 nm vermindert sich jedoch die elektrochemische Aktivität der Katalysatoren, so daß kleinere Partikel für den Einsatz in Katalysatoren uninteressant sind.

Die Ursachen für die verbesserte Kohlenmonoxid-Toleranz der erfindungsgemäßen Legierungskatalysatoren wird noch nicht völlig verstanden. Eine mögliche Erklärung könnte darin liegen, daß die Legierungspartikel unterschiedliche Oberflächenbereiche aufweisen. So gibt es Oberflächenbereiche, die im wesentlichen durch Platinatome gebildet werden und die somit der Vergiftung durch Kohlenmonoxid unterliegen. Daneben gibt es andere Oberflächenbereiche, die von Rutheniumatomen gebildet werden. Durch Diffusionsvorgänge auf den Legierungspartikeln gelangt das an den Platinatomen adsorbierte Kohlenmonoxid in Berührung mit den Rutheniumatomen und kann dort bei Anwesenheit von Sauerstoff zu Kohlendioxid oxidiert werden. Wegen der Kleinheit der Legierungspartikel des erfindungsgemäßen Katalysators findet dieser Diffusionsvorgang auch schon bei den niedrigen Betriebstemperaturen einer PEM-Brennstoffzelle häufig genug statt, so daß eine effektive Regeneration der Platinoberflächen möglich ist.

Geschwindigkeitsbestimmender Schritt der Oxidation von Kohlenmonoxid ist demnach nicht die Reaktion mit dem Sauerstoff auf der Ruthenium-Oberfläche, sondern die Diffusion des Kohlenmonoxids auf der Kristallitoberfläche von Platinatomen zu Rutheniumatomen.

Als elektrisch leitfähiges Trägermaterial für den Katalysator kann Ruß, graphitierter Ruß, Graphit oder Aktivkohle mit spezifischen Oberflächen (BET-Oberflächen, gemessen nach DIN 66132) von etwa 40 bis 1500 m²/g verwendet werden. Auf diesen Träger werden die Platin/Ruthenium-Legierungspartikel in einer Konzentration von 10 bis 50 Gew.-%, bezogen auf das Gesamtgewicht des Katalysators, aufgebracht. Das Atomverhältnis Platin/Ruthenium liegt zwischen 1:4 und 4:1, bevorzugt jedoch bei 1:1.

Zur Herstellung des erfindungsgemäßen Katalysators müssen die Legierungspartikel in hochdisperser Form mit mittleren Partikelgrößen unter 2 nm auf den Träger aufgebracht werden. Diese geringen Partikelgrößen sind mit konventionellen Imprägnierverfahren nur schwer erhältlich. Darüber hinaus muß sichergestellt werden, daß eine echte Legierungsbildung stattfindet. Dies wird gewöhnlich durch Temperaturbehandlung bei Temperaturen oberhalb von 800 bis 900°C erreicht. Diese hohen Temperaturen führen jedoch zu einer Vergrößerung der abgeschiedenen Metallpartikel und machen es daher unmöglich, den erfindungsgemäßen Katalysator zu erhalten.

Erfindungsgemäß erfolgt die Abscheidung der Edelmetalle auf dem Trägermaterial durch Imprägnieren mit Hilfe vorgeformter, tensidstabilisierter Platin/Ruthenium-Legierungskolloide. Die Herstellung bimetallischer Legierungskolloide wird in der EP 423 627 B1 und in der DE 44 43 705 A1 beschrieben.

Gemäß der EP 423 627 B1 werden zur Herstellung von Legierungskolloiden Salze der entsprechenden Metalle einzeln oder als Mischung mit Tetraalkylammoniumtriorganohydroboraten ohne Anwendung von Wasserstoff in Tetrahydrofuran (THF) umgesetzt. Die gebildeten Legierungskolloide können durch Filtration von der Reaktionslösung abgetrennt werden und lassen sich sehr leicht in inerten, organischen Lösungsmitteln wie THF, Diglyme oder Kohlenwasserstoffen redispergieren.

Die DE 44 43 705 A1 beschreibt die Herstellung von wasserlöslichen, tensidstabilisierten Legierungspulvern. Hierzu werden Metallsalze in Gegenwart von stark hydrophilen Tensiden aus der Reihe der amphiphilen Betaine, kationische Tenside, Fettalkohol-Polyglykolether, Polyoxyethylen-Kohlenhydrat-Fettalkylester und/oder anionische Tenside und/oder amphiphile Zuckertenside in THF, Alkoholen oder direkt in Wasser mit chemischen Reduktionsmitteln wie Hydriden, Wasserstoff oder Alkaliformiat zwischen 0 und 100°C umgesetzt und anschließend isoliert. Die so erhaltenen Legierungskolloide sind wasserlöslich. Für die Zwecke der vorliegenden Erfindung werden wegen ihrer leichten Zersetzbarkeit durch Temperaturbehandlung bevorzugt amphiphile Betaine wie zum Beispiel 3-(N,N-Dimethyldodecylammonio)propansulfonat, Lauryldimethylcarboxymethylammoniumbetain oder Cocoamidopropylbetain eingesetzt.

Nach dem Imprägnieren wird das erhaltene Produkt mit geeigneten Lösungsmitteln gewaschen. Die stabilisierende Tensidhülle der Kolloidpartikel wird durch Kalzinieren entfernt, was gleichzeitig den Katalysator für seine Verwendung als Anodenkatalysator in der PEM Brennstoffzelle aktiviert.

Im Gegensatz zu den auf herkömmlichem Wege durch Kalzination bei hohen Temperaturen hergestellten Pt/Ru-Legierungskatalysatoren weisen die geträgerten, vorgeformten Kolloide nicht nur eine verbesserte Edelmetalldispersion sowie kleinere Legierungspartikel auf, sie zeichnen sich auch als Folge der höheren zugänglichen Edelmetalloberfläche durch eine sehr gute CO-Toleranz aus.

So kommt es bei herkömmlichen Legierungskatalysatoren der beiden Metalle durch die für die Legierungsbildung notwendige Temperatur zu eine starken Vergröberung der Edelmetallpartikel sowie zu einem Austausch der Gitterplätze von Platin und Ruthenium. Hierdurch steht ein Teil des Rutheniums nicht mehr an der Partikeloberfläche zur Verfügung. Beide Effekte führen zu einem Abfall der Leistungsdaten im elektrochemischen Vollzellentest unter Reformat/Luft-Bedingungen mit Konzentrationen von Kohlenmonoxid im Anodengas größer 100 ppm.

Durch verschiedene Maßnahmen bei der Herstellung der erfindungsgemäßen Pt/Ru-Kolloidkatalysatoren wird gewährleistet, daß die bimetallischen Kolloidpartikel auf dem Träger in hoher Dispersion vorliegen und keine Vergröberung der vorgeformten Legierungspartikel stattfindet.

So wird die Temperatur bei der Abscheidung der Kolloidpartikel in Abhängigkeit vom verwendeten Lösungsmittel zwischen 20 und 110°C gehalten und durch Optimieren der Zugabegeschwindigkeit, Verringern der Diffusionslimitierung durch Rühren und Einsatz von Elektrolyten eine hochdisperse Verteilung der bimetallischen Kolloidpartikel erreicht. Nach Entfernen des Lösungsmittels durch Filtration oder Destillation wird der Katalysator zweckmäßigerweise unter Vakuum getrocknet. Durch Kalzinieren des Katalysators bei Temperaturen zwischen 200 und 400°C unter Inertgas wird das noch anhaftende Schutzkolloid restlos entfernt und der Katalysator aktiviert.

Der Katalysator wird zur Herstellung verschiedener Bauelemente von Brennstoffzellen verwendet. So können Gasdiffusionselektroden hergestellt werden, welche eine poröse Katalysatorschicht auf einem hydrophobierten, elektrisch leitfähigen Substratmaterial enthalten. Hierzu wird der Katalysator unter Verwendung einer Lösung von NAFION® zu einer Tinte verarbeitet und in dieser Form auf ein leitfähiges hydrophobiertes Kohlepapier (Fa. TORAY, TGC 90) aufgebracht. Die Belegung des Kohlepapiers mit Edelmetall beträgt üblicherweise 0,01 bis 0,5, bevorzugt 0,2 mg Edelmetall/cm².

Mit Hilfe dieser Gasdiffusionselektrode kann eine sogenannte Membran-Elektroden-Einheit angefertigt werden, welche eine Protonen leitende Polymermembran und Gasdiffusionselektroden auf der Anoden- und Kathodenseite enthält, wobei für die Anodenseite die oben beschriebene Gasdiffusionselektrode verwendet wird.

Als alternatives Bauelement für Brennstoffzellen kann eine Protonen leitende Polymermembran hergestellt werden, welche je eine Katalysatorschicht auf der Anoden- und Kathodenseite aufweist, wobei die Katalysatorschicht der Anodenseite den erfindungsgemäßen Katalysator in den schon oben angegebenen Konzentrationen enthält.

Die folgenden Beispiele dienen zum besseren Verständnis der Erfindung. Die in den Beispielen hergestellten Katalysatoren wurden mittels Röntgenspektroskopie (XRD) und Transmissionselektronenmikroskop (TEM) charakterisiert. Anschließend wurden sie zu einer Gasdiffusionselektrode und einer Membran-Elektroden-Einheit (MEE) verarbeitet, wobei die Katalysatoren auf der Anodenseite der MEE eingesetzt wurden.

Die Bestimmung der CO-Toleranz erfolgte in einer PEM-Brennstoffzelle mit einem Zellenformat von 25 cm². Als Brenngas wurde ein simuliertes Methanolreformatgas der Zusammensetzung 50 Vol.-% Wasserstoff, 10 Vol.-% Stickstoff, 20 bis 25 Vol.-% Kohlendioxid mit bis zu 150 ppm Kohlenmonoxid und Sauerstoffanteilen bis zu 5 Vol.-% verwendet. Der Spannungsabfall ΔU (mV), der nach Zudosieren einer bestimmten Menge Kohlenmonoxid auftritt, stellt ein Maß für die CO-Toleranz des Katalysators dar. Je kleiner dieser Spannungsabfall ist, desto besser ist die CO-Toleranz des Katalysators. Die erfindungsgemäßen Katalysatoren zeigen in der Regel ΔU-Werte, die deutlich besser sind als die Vergleichswerte des kommerziell erhältlichen Katalysators.

### Beispiel 1:

Zur Herstellung eines Platin/Ruthenium-Kolloidkatalysators gemäß der Erfindung mit einem Edelmetallgehalt von 20 Gew.-% und einem Platin/Ruthenium-Atomverhältnis von 1:1 wurde wie folgt vorgegangen.

Zu einer Lösung von 56,5 g Pt/Ru-Kolloid (Pt/Ru-Atomverhälnis: 1:1, Anteil von Pt im Kolloid: 6,5 Gew.-%, hergestellt nach EP 423 627 B1, Beispiel 10, aus PtCl₂ und RuCl₃ mit Tetrabutylammoniumtriethylhydroborat in THF) in 2100 ml Toluol wurden unter Stickstoffüberleitung jeweils 500 ml Aceton und Toloul hinzugegeben und unter Rühren 22,25 g Vulcan XC-72 der Firma Cabot suspendiert. Es wurde zunächst 30 min bei Raumtemperatur, anschließend bei 50°C ebenfalls 30 min gerührt. Der Katalysator wurde abfiltriert, mit 100 ml Toluol/Aceton (1:1) gewaschen und bei 80°C im Vakuum getrocknet. Anschließend wurde der Katalysator bei 350°C unter Stickstoffüberleitung 1 Stunde kalziniert.

Das XRD-Spektrum des Katalysators zeigte den verschobenen (110)-Reflex des Platins bei etwa 40° (2 Theta), was auf eine Legierungsbildung mit Ruthenium hinweist. Dagegen war der (111)-Reflex des Rutheniums bei 2 Theta= 44° nicht zu erkennen. Die Kristallitgröße der Platin/Ruthenium Kristallite lag bei etwa 1,1 nm, die Gitterkonstante betrug 0,388 nm.

### Beispiel 2:

Es wurde ein weiterer Platin/Ruthenium-Kolloidkatalysator gemäß der Erfindung mit einem Edelmetallgehalt von 20 Gew.-% und einem Platin/Ruthenium-Atomverhältnis von 1:1 wie folgt hergestellt.

16,5 g Vulcan XC-72 der Firma Cabot wurden in 1000 ml Toluol suspendiert und mit einer Lösung von 40,0 g des Pt/Ru- Kolloids aus Beispiel 1 in 1000 ml Toluol bei Raumtemperatur unter Stickstoffüberleitung versetzt. Es wurde zunächst 60 min zum Rückfluß erhitzt und das Lösungsmittel im Vakuum bei 50°C entfernt. Danach wurde der Katalysator mit 100 ml Aceton gewaschen und bei 80°C im Vakuum getrocknet. Anschließend wurde der Katalysator bei 350°C unter Stickstoffüberleitung 1 h kalziniert.

Die Röntgenanalyse dieses Katalysators zeigte ebenfalls das Vorliegen einer Pt/Ru-Legierung, die Kristallitgröße lag bei 1,8 nm, die Gitterkonstante bei 0,388 nm.

### Vergleichsbeispiel 1:

Für die folgenden Anwendungsbeispiele wurde auch ein kommerziell erhältlicher Pt/Ru-Trägerkatalysator der Firma E-TEC mit einem Edelmetallgehalt von 20 Gew.-% und einem Pt/Ru-Atomverhältnis von 1:1 verwendet.

Die Röntgenanalyse (XRD) dieses Katalysators zeigte ebenfalls das Vorliegen einer Pt/Ru-Legierung wie in den Beispielen 1 und 2. Die Kristallitgröße (XRD) der Pt/Ru-Kristallite lag jedoch bei 2,7 nm.

### Anwendungsbeispiel:

Die Katalysatoren der vorangegangenen Beispiele wurden jeweils unter Verwendung einer Lösung von NAFION® zu einer Tinte verarbeitet und in dieser Form auf ein leitfähiges hydrophobiertes Kohlepapier(Fa. TORAY, TGC 90) aufgebracht. Die Belegung betrug in allen Fällen 0,2 mg Edelmetall/cm². Die so hergestellte Anode wurde mit einer ionenenleitfähigen Membran (Nafion® 117) und einer Kathoden-Elektrode (Belegung 0,3 mg Pt/cm²) zusammen heiß verpreßt und so eine Membran-Elektroden-Einheit (MEE) hergestellt.

Die Messung der elektrochemischen Leistungsdaten erfolgte in einer PEM-Einzelzelle (druckloser Betrieb, Temperatur 75°C), wobei eine Stromdichte von 0,5 A/cm² eingestellt wurde.

Es wurde ein Brenngas mit folgender Zusammensetzung gewählt:
58 Vol.-% Wasserstoff, 15 Vol.-% Stickstoff,
24 Vol.-% Kohlendioxid, 3 Vol.-% Sauerstoff

Der Kohlenmonoxidgehalt des Brenngases wurde auf 100 ppm und in einer zweiten Meßreihe auf 120 ppm eingestellt. Die dabei gemessenen Spannungsabfälle ΔU gegenüber der Messung ohne Zugabe von Kohlenmonoxid sind in Tabelle 1 aufgelistet.

**Tabelle 1:**

| Beispiel | 100 ppm CO ΔU [mV] | 120 ppm CO ΔU [mV] |
|---|---|---|
| B1 | 18 | 27 |
| B2 | 16 | 37 |
| V1 | 80 | 128 |

Die PEM-Brennstoffzelle mit dem Vergleichskatalysator V1 zeigt den höchsten Spannungsabfall. Den geringsten Spannungsabfall bei hohen Gehalten des Brenngases an Kohlenmonoxid zeigt die PEM-Brennstoffzelle mit dem Katalysator nach Beispiel 1, welcher die kleinsten Legierungspartikel enthielt (nur 1,1 nm gegenüber 2,7 nm beim Vergleichskatalysator).

## Patentansprüche

1. Platin/Ruthenium-Legierungskatalysator, enthaltend fein verteilte Legierungspartikel auf einem pulverförmigen, elektrisch leitfähigen Trägermaterial,
dadurch gekennzeichnet,
daß die Legierungspartikel mittlere Kristallitgrößen von 0,5 bis 2 nm aufweisen.

2. Legierungskatalysator nach Anspruch 1,
dadurch gekennzeichnet,
daß das elektrisch leitfähige Trägermaterial aus Ruß, graphitiertem Ruß, Graphit oder Aktivkohle besteht.

3. Legierungskatalysator nach Anspruch 1,
dadurch gekennzeichnet,
daß der Anteil von Platin und Ruthenium zwischen 10 und 50 Gew.-%, bezogen auf das Gesamtgewicht des Legierungskatalysators, liegt.

4. Verfahren zur Herstellung eines Legierungskatalysators nach Anspruch 1,
dadurch gekennzeichnet,
daß das elektrisch leitfähige Trägermaterial in einem Lösungsmittel suspendiert und durch Zugabe eines vorgeformten, durch Tenside stabilisierten, bimetallischen Platin/Ruthenium-Legierungskolloids mit den Legierungspartikeln bei erhöhten Temperaturen zwischen 20 und 110°C belegt, durch Entfernen des Lösungsmittels von der flüssigen Phase der Suspension abgetrennt, gewaschen und durch Kalzinieren bei Temperaturen zwischen 200 und 400°C unter Inertgas aktiviert wird.

5. Verfahren nach Anspruch 4,
dadurch gekennzeichnet,
daß ein organisches Lösungsmittel aus der Gruppe Tetrahydrofuran, Diglyme oder Kohlenwasserstoffe verwendet wird.

6. Verfahren nach Anspruch 4,
dadurch gekennzeichnet,
daß das Legierungskolloid durch hydrophile Tenside aus der Gruppe der amphiphilen Betaine stabilisiert ist und zum Aufbringen des Kolloids auf das Trägermaterial ein wäßriges Lösungsmittel verwendet wird.

7. Gasdiffusionselektrode für die Anodenseite einer PEM-Brennstoffzelle, welche eine poröse Katalysatorschicht auf einem hydrophobierten, elektrisch leitfähigen Substratmaterial enthält,
dadurch gekennzeichnet,
daß die Katalysatorschicht den bimetallischen Legierungskatalysator nach Anspruch 1 enthält.

8. Membran-Elektroden-Einheit für PEM-Brennstoffzellen, welche eine Protonen leitende Polymermembran und Gas-diffusionselektroden auf der Anoden- und Kathodenseite enthält,
dadurch gekennzeichnet,
daß sie auf der Anodenseite die Gasdiffusionselektrode nach Anspruch 7 enthält.

9. Protonen leitende Polymermembran für PEM-Brennstoffzellen, welche je eine Katalysatorschicht auf der Anoden- und Kathodenseite aufweist,
dadurch gekennzeichnet,
daß die Katalysatorschicht auf der Anodenseite den Katalysator nach Anspruch 1 enthält.

## Claims

1. Platinum/ruthenium alloy catalyst containing finely divided alloy particles on a pulverulent, electrically conductive support material,
characterised in that
the alloy particles have average crystallite sizes of 0.5 to 2 nm.

2. Alloy catalyst according to claim 1,
characterised in that
the electrically conductive support material consists of carbon black, graphitised carbon black, graphite or activated carbon.

3. Alloy catalyst according to claim 1,
characterised in that
the proportion of platinum and ruthenium is between 10 and 50 wt.%, relative to the total weight of the alloy catalyst.

4. Process for the production of an alloy catalyst according to claim 1,
characterised in that
the electrically conductive support material is suspended in a solvent and is surface-modified with alloy particles at elevated temperatures of between 20 and 110°C by addition of a preformed, surfactant-stabilised, bimetallic platinum/ruthenium alloy colloid, said support material is separated from the liquid phase of the suspension by removal of the solvent, is washed and activated by calcination under inert gas at temperatures of between 200 and 400°C.

5. Process according to claim 4,
characterised in that
an organic solvent from the group tetrahydrofuran, diglyme or hydrocarbons is used.

6. Process according to claim 4,
characterised in that
the alloy colloid is stabilised by hydrophilic surfactants from the group of amphiphilic betaines and an aqueous solvent is used to apply the colloid onto the support material.

7. Gas diffusion electrode for the anode side of a PEM fuel cell which contains a porous catalyst layer on a hydrophobised, electrically conductive substrate material,
characterised in that
the catalyst layer contains the bimetallic alloy catalyst according to claim 1.

8. Membrane/electrode unit for PEM fuel cells which contains a proton-conducting polymer membrane and gas diffusion electrodes on the anode and cathode side,
characterised in that
said unit contains the gas diffusion electrode according to claim 7 on the anode side.

9. Proton-conducting polymer membrane for PEM fuel cells which comprises one catalyst layer on the anode side and one on the cathode side,
characterised in that
the catalyst layer on the anode side contains the catalyst according to claim 1.

## Revendications

1. Catalyseur en alliage platine/ruthénium contenant des particules d'alliage finement réparties sur un matériau de support pulvérulent conducteur d'électricité,
caractérisé en ce que
les particules d'alliage possèdent des tailles de cristallite moyennes allant de 0,5 à 2 nm.

2. Catalyseur en alliage selon la revendication 1,
caractérisé en ce que
le matériau de support conducteur d'électricité consiste en du noir de fumée, du noir graphité, du graphite ou du charbon activé.

3. Catalyseur en alliage selon la revendication 1,
caractérisé en ce que
le pourcentage de platine et de ruthenium se situe entre 10 et 50 % en poids rapporté au poids total de catalyseur en alliage.

4. Procédé de préparation d'un catalyseur en alliage selon la revendication 1,
caractérisé en ce que
le matériau de support conducteur de l'électricité est mis en suspension dans un solvant et revêtu par addition d'un colloïde, d'alliage platiné/ruthénium préformé, stabilisé par des agents tensioactifs, bimétalliques, avec des particules d'alliage à des températures accrues comprises entre 20 et 110°C, est séparé de la phase liquide de la suspension par élimination du solvant, lavé et activé par calcination à des températures comprises entre 200 et 400°C sous gaz inerte.

5. Procédé selon la revendication 4,
caractérisé en ce qu'
on utilise un solvant organique choisi dans le groupe du tétrahydrofurane, du diglyme ou des hydrocarbures.

6. Procédé selon la revendication 4,
caractérisé en ce que
le colloïde d'alliage est stabilisé par des agents tensioactifs hydrophiles choisis dans le groupe des bétaïnes amphiphiles, et pour l'application du colloïde sur le matériau de support on utilise un solvant aqueux.

7. Electrodes à diffusion gazeuse pour la face anodique d'une cellule à combustible du type PEM qui contient une couche de catalyseur poreuse sur un matériau de substrat rendu hydrophobe, électriquement conducteur,
caractérisé en ce que
la couche de catalyseur renferme le catalyseur en alliage bimétallique selon la revendication 1.

8. Unité électrode-membrane pour cellules à combustible du type PEM qui contient une membrane de polymère conductrice de protons et des électrodes de diffusion gazeuse sur les faces d'anodes et de cathodes,
caractérisée en ce qu'
elle contient sur la face d'anode, l'électrode de diffusion gazeuse selon la revendication 7.

9. Membrane de polymère conductrice de protons pour cellules à combustible du type PEM qui possède une couche de catalyseur sur les faces d'anodes et de cathodes,
caractérisée en ce que
la couche de catalyseur sur la face anodique renferme le catalyseur selon la revendication 1.
